# EUROPEAN PATENT SPECIFICATION

(11) **EP 2 674 243 B1**
(45) Date of publication and mention of the grant of the patent: **26.07.2023**
(21) Application number: 13171405.7
(22) Date of filing: 11.06.2013
(51) Int. Cl.: B23P 6/00, B23P 6/04, B23K 20/02, B23K 26/32, B23K 26/34, B23K 35/00, B23K 35/02, B23K 9/04, F01D 5/00, B23K 101/00, B23K 103/14, B23K 103/18

(54) **METHOD FOR REPAIRING METALLIC ARTICLES**
VERFAHREN ZUR REPARATUR VON METALLGEGENSTÄNDEN
PROCÉDÉ DE RÉPARATION D'ARTICLES MÉTALLIQUES

(30) Priority: 13.06.2012 CN 201210195082
(43) Date of publication of application: 18.12.2013
(73) Proprietor: General Electric Company, Schenectady, NY 12345 (US)
(72) Inventor: Wu, Zhiwei, Niskayuna, NY New York 12309 (US); Liu, Yong, Niskayuna, NY New York 12309 (US); Peng, Zhixue, Niskayuna, NY New York 12309 (US); Oconnell, Matthew James, Niskayuna, NY New York 12309 (US); Li, Yanmin, Niskayuna, NY New York 12309 (US)
(74) Representative: Novagraaf Group

(56) References cited:
- EP-A1- 2 492 044
- WO-A1-92/03241
- WO-A1-2005/123310
- WO-A2-03/025244
- DE-A1-102005 055 984
- JP-A- 2009 235 534
- US-A- 5 593 085
- US-A1- 2006 086 776
- US-A1- 2012 193 329

## Description

### BACKGROUND OF THE DISCLOSURE

This disclosure relates generally to methods for repairing metallic articles as per the preamble of claim 1. More particularly, this disclosure relates to methods for repairing metallic articles, such as gas turbine engine components with gap defects. Such a method is disclosed in document DE 10 2005 055984 A1.

Gas turbine engine components, such as blades and vanes are critical for safe operation of the gas turbine engines. Such gas turbine engine components are usually operated at high temperature and high pressure. In order to endure the high temperature and high pressure, the gas turbine engine components are typically made from superalloy materials, such as nickel-based, titanium-based, or cobalt-based superalloy materials.

However, during manufacturing processes as well as after longtime service of the gas turbine engine components, gap defects including, but not limited to cracks or crevices may arise therein. As it is difficult and expensive to manufacture the gas turbine engine components, it is more desirable to repair such components having the gap defects rather than to replace them.

There have been various attempts to repair the gas turbine engine components with the gap defects. For example, laser machining systems are employed. During repairing processes, laser beams form molten pools on the gap defects and repair materials are deposited onto the gap defects layer by layer along movement paths of the molten pools to finish the repair of the components. However, due to the localized heat input from the laser beams during repairing, it may induce further gap defects, such as cracks in the repaired gas turbine engine components. In addition, the superalloy materials of the components to be repaired typically have directionally solidified and single crystal alloy structures. Thus, when deposited onto such directionally solidified and single crystal superalloy material, the strength properties of the deposited materials may be much lower than the original components, which is disadvantageous for repairing the gas turbine engine components.

DE 10 2005 055 984 A1 describes a method for repairing an outer ring segment of a gas turbine with removing of a broken inner segment, aligning a replacement segment, gas tight welding of the outer ring segment and the replacement segment under vacuum, and finally connecting these segments by hot isostatic pressing. EP 2 492 044 A1 refers to a method of repairing a component with removing a damaged portion, providing a patch having a rim, placing the patch on the exposed region of the component, and diffusion bonding the patch and the component.

JP 2009/235534 A provides a porous body forming method which can easily and securely form a porous body by using low-cost production equipment. The porous body forming method includes: a cold spray stage where material powder is jetted at high speed from a nozzle together with a working gas of a prescribed temperature so as to be deposited on a base material, thus a film comprising a porous body is formed; and a porous body separation stage where the porous body is separated from the base material.

US 5,593,085 A discloses a method for determining the generation of a diffusion bond between two articles. The two articles are sealed together to define a cavity therebetween. A vacuum is drawn in the cavity by means of an evacuation tube having a passageway. The passageway is then sealed and the articles are subjected to a temperature and pressure to diffusion bond the articles together. A successful diffusion bond can be determined if the evacuation tube sidewall is collapsed. Therefore, there is a continued need for new and improved methods for repairing gas turbine engine components with gap defects to ensure safe operation of the gas turbine engines.

### BRIEF DESCRIPTION OF THE DISCLOSURE

The herein claimed invention relates to a method as set forth in claim 1. Preferred embodiments are provided by the dependent claims.

These and other advantages and features will be more understood from the following detailed description of preferred embodiments of the invention that is provided in connection with the accompanying drawings.

### BRIEF DESCRIPTION OF THE DRAWINGS

FIG. 1 is a schematic flow chart illustrating a method of repairing a metallic particle in accordance with one embodiment of the invention;
FIGS. 2-4 are schematic diagrams illustrating the first three steps of the flow chart shown in FIG. 1;
FIGS. 5-7 are schematic diagrams illustrating the fourth step of the flow chart shown in FIG. 1 ; and
FIGS. 8-9 are schematic diagrams of a powder micro-spark deposition (PMSD) process in accordance with two embodiments of the invention.

### DETAILED DESCRIPTION OF THE INVENTION

Preferred embodiments of the present disclosure will be described hereinbelow with reference to the accompanying drawings. In the following description, well-known functions or constructions are not described in detail to avoid obscuring the disclosure in unnecessary detail.

According to the invention as herein claimed a method for repairing a metallic particle having a gap defect is provided. As used herein, the term "metallic particle" includes any suitable metallic material. In one non-limiting example, the metallic particle comprises a gas turbine engine component, such as a blade or a vane. Non-limiting examples of material of the gas turbine engine component include superalloy material, such as nickel-based, titanium-based, or cobalt-based superalloy material.

The gap defect may include a gap having any dimensions, which may result in deterioration of the gas turbine engine component. The gap defect may have a relatively small dimension and comprises a crack or a crevice. Alternatively, the gap defect may have relatively large dimensions and comprises a cavity.

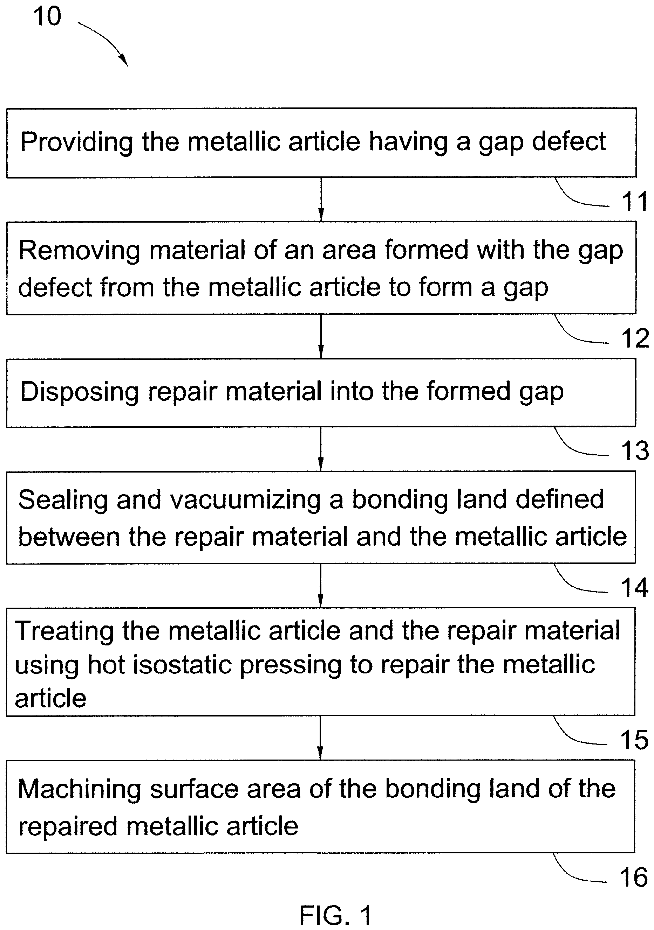

FIG. 1 illustrates a schematic flow chart 10 illustrating the method of repairing a metallic particle having a gap defect in accordance with one embodiment of the invention. As illustrated in FIG. 1, during repairing, the method comprising providing a metallic article having a gap defect in step 11, removing material of an area formed with or defining the gap defect from the metallic particle to form or route out a gap having a predetermined or desired shape and a larger volume than the gap defect in step 12, and filing repair material into the formed gap on the metallic article in step 13.

The method further comprises sealing and vacuumizing a bonding land defined between the repair material and the metallic article in step 14, and treating the metallic article and the repair material using the hot isostatic pressing (HIP) to repair the metallic article in step 15. According to the invention as herein claimed, the sealing in the step 14 is performed by sealing surface area of the bonding land. The sequences of the sealing and vacuuming in the step 14 may vary. Optionally, the method further comprises machining the surface area of the bonding land of the repaired metallic articles in step 16.

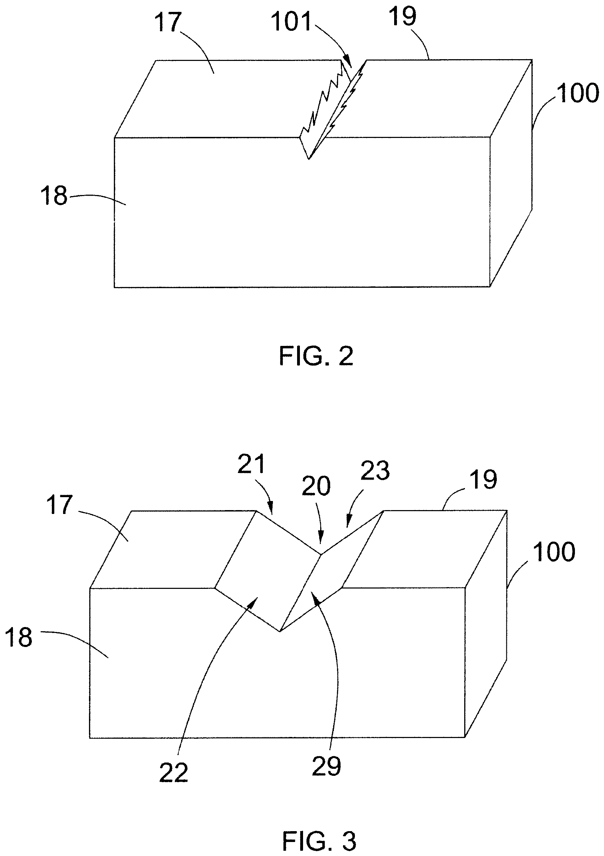

FIGS. 2-6 illustrate schematic diagrams showing the method of repairing a metallic article 100 having a gap defect 101 in accordance with various embodiments of the invention. It should be noted that the arrangements in FIGS. 2-6 are merely illustrative.

As illustrated in FIG. 2, the metallic article 100 is provided and the gap defect 101 is defined thereon. In the illustrated embodiment, the metallic article 100 comprises a cubic shape. Alternatively, the metallic particle 100 may have any other shapes, such as a cylindrical shape or an arc shape based on the applications of the metallic article 100. For example, the metallic particle 100 comprises the blade of the gas turbine engine and has an arc shape.

The gap defect 101 comprises a crack extending downwardly from three surfaces 17-19 of the metallic article 100 to the interior thereof. In some applications, the gap defect 101 may extend downwardly from a single surface of the metallic article 100 to the interior thereof. In other applications, based on different situations, the gap defect 101 may be formed in the interior of the metallic article 100.

Then, as illustrated in FIG. 3, the material of an area (not labeled) formed with the gap defect 101 are removed from the metallic article 100 to form or rout out a V-shaped formed gap 20. In some examples, the shape of the formed gap 20 may be predetermined and the formed gap 20 have a larger volume than the gap defect 101 for accommodation of the repair material. Non-limiting examples of the shape of the formed gap 20 may include a cubic shape, a cylindrical shape, a conical shape, or other suitable shapes.

Based on different dimensions of the formed gap 20, the formed gap 20 may be regarded as a crack, a cavity, a cut, a recess, an opening, or any other spaces formed on the metallic article 100 after removing the material formed with the gap defect 101.

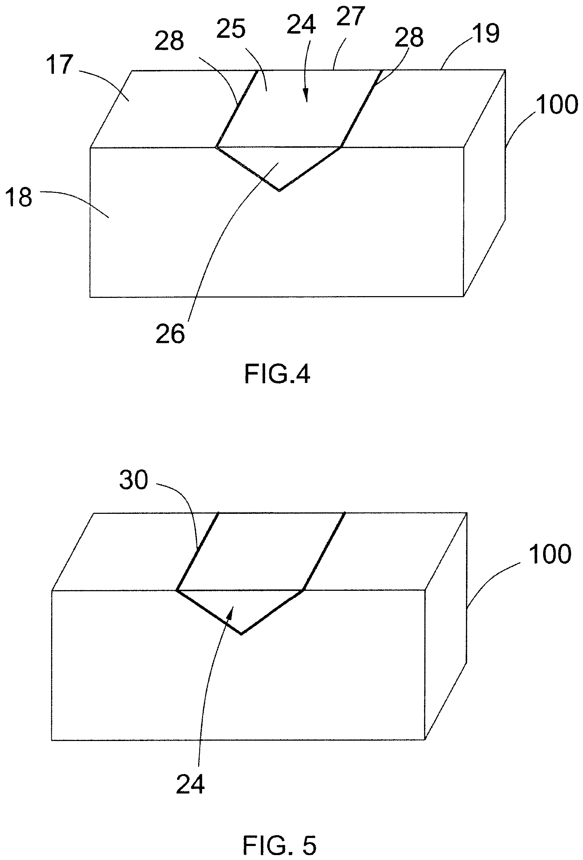

Subsequently, as illustrated in FIG. 4, the repair material is disposed into the formed gap 20. For some arrangements, in order to ensure the strength of the metallic article 100 after repaired, the repair material may be similar to the material of the original metallic article 100. Based on different materials of the metallic article 100 to be repaired, the repair material may be determined accordingly. Non-limiting examples of the repair material comprise titanium and titanium alloys, nickel and nickel alloys, cobalt and cobalt alloys, and superalloys including Ni-based, Co-based or Ti-based.

For the illustrated arrangement in FIG. 3, the gap defect 101 extends downwardly from the three surfaces 17-19, after removal of the materials of the metallic article 100, the three surfaces 17-19 are communicated with each other so that the formed gap 20 is structured to have three opening 21-23 extending downwardly from the respective surfaces 17-19. Accordingly, the repair material is provided in the form of a separate metallic part 24.

As used herein, the term "separate metallic part" means an integrated metallic part to be disposed into the gap 20 instead of metallic powder. Alternatively, the formed gap 20 may define a single opening, such as a configuration like a blind hole (not shown) formed on the metallic article 100 after removal of the area defining a gap defect. Thus, either a separate metallic part or metallic powder may be disposed therein.

The repair material is disposed into and fit well with the formed gap 20. In non-limiting examples, the formed gap 20 may be fully filled with the repair material so that surface(s) of the repair material are in flush with the respective surfaces 17-19 of the metallic article 100. For example, as depicted in FIG. 4, after accommodation of the separate metallic part 24 into the formed gap 20, surfaces 25-27 are in flush with the respective surfaces 17-19 of the metallic article 100. In certain applications, the surface(s) of the repair material may not be in flush with the respective surfaces of the metallic article 100.

In addition, although a single separate metallic part 24 in the illustrated example is disposed into the formed gap 20, more than one separate metallic part may also be arranged, for example be stacked into the formed gap 20 together as so to function as the single separate metallic part 24.

Next, as illustrated in FIG. 5, the surface area 28 of a bonding land (or bonding interface) 29 (shown in FIG. 2) defined between the repair material and the metallic article 100 is sealed, and the bonding land 29 is vacuumized meanwhile. For the illustrated example, the whole surface area 28 is sealed so that the sealing material forms a continuous head-tail connecting bonding line 30 along the surface area 28 to be sealed.

Non-limiting examples of the sealing material may include any sealing material having suitable cost and compatibility with the base material, such as the metallic article 100. For example, the sealing material comprises Ni-based superalloy IN 718 for sealing the base material of Ni-based superalloy GTD 111. In addition, during sealing, the sealing material may be in the form of metallic powder. The thickness of the material deposited on the surface area 28 may be to a range of from about 0.01mm to 1mm, for example 0.5mm.

Different sealing techniques may be employed to perform the sealing. In some examples, the sealing process may be performed in a vacuum state so that the bonding land 29 may be in the vacuum state while the sealing process is performed. For example, the sealing process is performed using an electron beam deposition (EBD) process in the vacuum state.

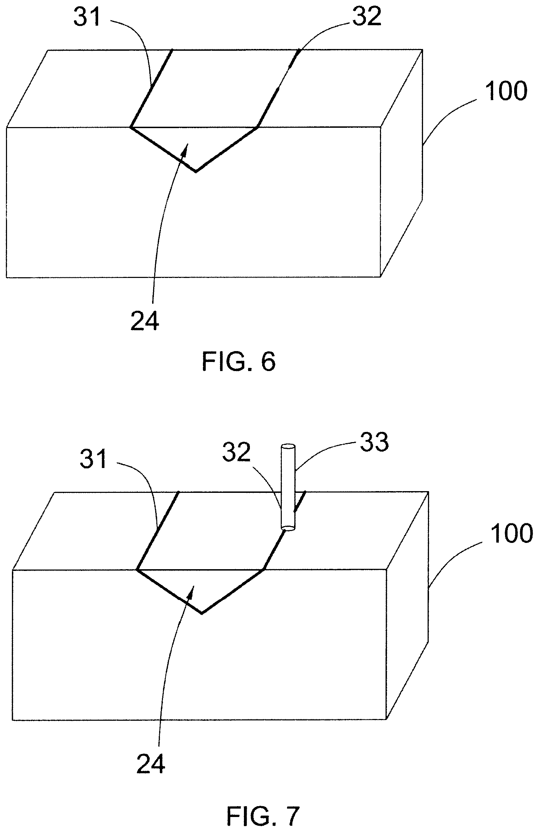

In other examples, the sealing process may be performed in a non-vacuum state. As illustrated in FIG. 6, a portion of the surface area 28 (shown in FIG. 4) is sealed in the non-vacuum state. According to the invention as herein claimed, the sealing material forms a discontinuous connecting bonding line 31 and an opening 32 is defined on the surface area 28. As used herein, the term "discontinuous" means the bonding line 31 is not continuous to form a head-tail connecting boning line.

Then, as illustrated in FIG. 7, an outgassing tube 33 is in fluid communication with the bonding land 29 through the opening 32 to vacuumize the bonding land 29 between the repair material and the metallic article 100. In one non-limiting example, when the pressure in the bonding land 29 is lower than 0.01torr, the outgassing tube 33 is processed, for example is pinched off through heat so as to seal the bonding land 29.

Other suitable techniques may also be employed to vacuumize the bonding land 29 through the opening 32. In certain applications, more than one opening 32 and more than one respective outgassing tube 33 may be employed to vacuumize the bonding land 29.

For the illustrated arrangement in FIG. 6, different techniques including, but not limited to a laser powder deposition (LPD) process or a powder micro-spark deposition (PMSD) process may be employed to form the discontinuous bonding line 31.

In accordance with the herein claimed invention, a powder micro-spark deposition (PMSD) process is employed to form the discontinuous bonding line 31 As used herein, the term "PMSD" means a process employing an electrode comprising material depositable onto the surface area 28 by electric spark deposition and a powder feed channel configured within or substantially surrounding the electrode for guiding powder comprising electrically conductive material into a discharging gap between the electrode and the substrate so as to achieve high powder capture efficiency.

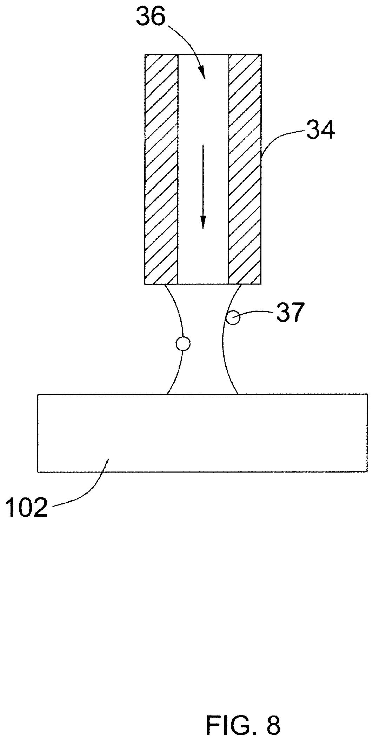

FIGS. 8-9 are schematic diagrams of electrodes 34, 35 employed in the PMSD process in accordance with two embodiments of the invention. As illustrated in FIG. 8, the electrode 34 comprises material for deposition onto a substrate 102, such as the surface area 28 by electric spark deposition. The electrode 34 further defines a powder feed channel 36 configured within the electrode 34 to guide powder 37 comprising electrically conductive material into a discharging gap between the electrode 34 and the substrate 102. In non-limiting examples, during deposition, the powder 37 is fed into the discharging gap in a direction substantially coaxial with respect to the electrode 34 so as to achieve high powder capture efficiency to seal the surface area 28 to form the bonding line.

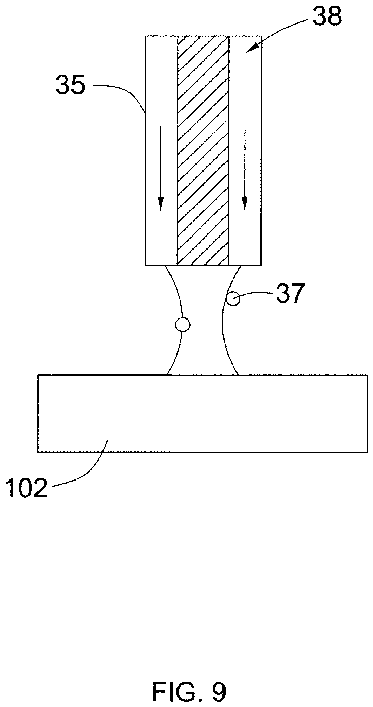

Alternatively, as illustrated in FIG. 9, the electrode 35 comprises material depositable onto a substrate 102, such as the surface area 28 by electric spark deposition. The electrode 35 further defines a powder feed channel 38 at least partially surrounding the electrode 35 to guide the powder 37 comprising electrically conductive material into a discharging gap between the electrode 35 and the substrate 102. In non-limiting examples, during deposition, the powder 37 is fed into the discharging gap from locations surrounding a tip of the electrode 35 in different directions so as to achieve high powder capture efficiency to seal the surface area 28 to form the bonding line.

Thus, during deposition, the PMSD process comprises depositing materials onto a substrate through a consumable electrode by electric spark deposition, while feeding powder comprising electrically conductive material into a discharging gap between the consumable electrode and the substrate through a powder feed channel configured within or surrounding the consumable electrode.

Other descriptions of the PMSD process can be found in a Non-provisional US application Ser. No. 13/359973, filed January 27, 2012 (Docket number 236986-1).

In certain applications, when the repair material is in the form of the metallic powder and filled into a formed gap having a suitable shape (not shown), at least a portion of the surface area of the bonding land between the repair material and the metallic article may be processed to form a discontinuous bonding line in a non-vacuum state.

Then, the repair powder material and the metallic article to be repair may be heated in a vacuum heating device, such as a vacuum oven so that the surface of the repair powder material may be sintered and the discontinuous boning line is also sintered to form a continuous head-tail connecting bonding line, so that bonding land between the repair powder material and the metallic article is sealed and vacuumized.

Finally, after sealing and vacuumizing of the bonding land, the repair material and the metallic article 100 to be repaired are treated using a hot isostatic pressing (HIP) process so as to form an unitary or a single metallic article piece to perform the repair. In one non-limiting example, the HIP condition may include a temperature of around 1200°C and a pressure of 200MPa to process Ni-based superalloy. Based on different materials to be processed, the HIP condition may vary. Additionally, in some applications, following the HIP process, the surface(s) of the metallic article may be machined to remove the deposited sealing material and/or heat affected zone (HAZ) thereon.

In embodiments of the invention, the bonding between the repair material and the metallic article is performed in a solid state. Compared to conventional repair processes employing melting and resolidification during repairing, formation of deleterious phases in the metallic article may be eliminated.

In some examples, the repair material is provided in the form of a separate metallic part, so that the repair material may be fabricated before repairing so as to save the repairing time. In addition, based on the material of the metallic article to be repaired, the separate metallic part may be fabricated to have similar microstructure as the metallic article to be repaired. This is advantageous for repairing of the metallic article, such as the gas turbine engine components having directionally solidified and single crystal alloy structures to increase the strength capability of the metallic article. In one example, the strength of the repaired components is above 90% of the strength of the original components.

During sealing of the surface area of the bonding land, different deposition processes, such as the PMSD process may be employed and limited direct fusion welding of the metallic article to be repaired is involved and thus formation of the heat affected zone may be avoided or mitigated on the surface area. After removal of the deposition layer and/or the heat affected zone, no heat affected zone is formed in the bonding land and the microstructure of the repaired metallic article is not affected so as to ensure the strength of the metallic article.

While the disclosure has been illustrated and described in typical embodiments, it is not intended to be limited to the details shown, since various modifications and substitutions can be made without departing in any way from the scope of the herein claimed invention.

## Claims

1. A method for repairing a metallic article, comprising:
providing (11) a metallic article (100) having a gap defect (101);
removing (12) material of an area formed with the gap defect (101) from the metallic article (100) to form a gap (20);
disposing (13) repair material into the formed gap (20);
sealing (14) and vacuumizing a bonding land (29) defined between the metallic article (100) and the repair material; and
treating (15) the repair material and the metallic article (100) using hot isostatic pressing to perform the repair, wherein sealing the bonding land (29) is performed by sealing the surface area (28) of the bonding land (29),
**characterized in that** the surface area (28) of the bonding land (29), and the sealing material form a discontinuous connecting bonding line (31) and define an opening (32) on the surface area (28);
wherein sealing the surface area (28) of the bonding land (29) is performed using a powder micro-spark deposition process.

2. The method of claim 1, wherein the metallic article (100) comprises a gas turbine engine component.

3. The method of claim 1 or 2, wherein the formed gap (20) has a greater volume than a volume of the gap defect (101).

4. The method of any of claims 1 to 3, wherein the repair material is in the form of a separate metallic part (24) or metallic powder.

5. The method of claim 1, wherein a thickness of material sealed on the surface area (28) is in a range of from about 0.01mm to about 1.0mm.

6. The method of claim 1 or 5, wherein the thickness of the material sealed on the surface area (28) is about 0.5mm.

7. The method of any of claims 1, 5 or 6, wherein the step (14) of sealing and vacuumizing the bonding land (29) is performed in a vacuum state.

8. The method of any of claims 1, 5 or 6, wherein the step (14) of sealing the surface area of the bonding land (29) and vacuumizing the bonding land (28) is performed in a non-vacuum state.

9. The method of any of claims 1 or 5 to 8, wherein sealing the surface area (28) of the bonding land (29) forms a continuous head-tail connecting bonding line (30).

10. The method of claims 1 or 5 to 9, wherein an outgassing tube (33) is employed to be in fluid communication with the bonding land (29) through the opening to vacuumize the bonding land (29).

11. The method of any of claims 1 or 5 to 10, further comprising machining (16) the surface area (28) after the step (15) of treating the repair material and the metallic article by the hot isostatic pressing.

## Patentansprüche

1. Verfahren zum Reparieren eines metallischen Gegenstands, umfassend:
Bereitstellen (11) eines metallischen Gegenstands (100), der einen Spaltdefekt (101) aufweist;
Entfernen (12) von Material einer Region, die mit dem Spaltdefekt (101) von dem metallischen Gegenstand (100) ausgebildet ist, um einen Spalt (20) auszubilden;
Anordnen (13) von Reparaturmaterial in den ausgebildeten Spalt (20);
Versiegeln (14) und Vakuumieren eines Verbindungsstegs (29), der zwischen dem metallischen Gegenstand (100) und dem Reparaturmaterial definiert ist; und
Behandeln (15) des Reparaturmaterials und des metallischen Gegenstands (100) unter Verwendung von heißisostatischem Pressen, um die Reparatur durchzuführen, wobei das Versiegeln des Verbindungsstegs (29) mittels Versiegeln der Oberflächenregion (28) des Verbindungsstegs (29) durchgeführt wird,
**dadurch gekennzeichnet, dass** die Oberflächenregion (28) des Verbindungsstegs (29) und das Versiegelungsmaterial eine diskontinuierliche zusammenfügende Verbindungslinie (31) ausbilden und eine Öffnung (32) auf der Oberflächenregion (28) definieren;
wobei das Versiegeln des Oberflächenbereichs (28) des Verbindungsstegs (29) unter Verwendung eines Pulvermikrofunkenabscheidungsverfahrens durchgeführt wird.

2. Verfahren nach Anspruch 1, wobei der metallische Gegenstand (100) eine Gasturbinentriebwerkskomponente umfasst.

3. Verfahren nach Anspruch 1 oder 2, wobei der ausgebildete Spalt (20) ein größeres Volumen als ein Volumen des Spaltdefekts (101) aufweist.

4. Verfahren nach einem der Ansprüche 1 bis 3, wobei das Reparaturmaterial in der Form eines separaten metallischen Teils (24) oder eines metallischen Pulvers vorliegt.

5. Verfahren nach Anspruch 1, wobei eine Dicke von Material, das auf der Oberflächenregion (28) versiegelt ist, in einem Bereich von etwa 0,01 mm bis etwa 1,0 mm liegt.

6. Verfahren nach Anspruch 1 oder 5, wobei die Dicke des Materials, das auf der Oberflächenregion (28) versiegelt ist, etwa 0,5 mm beträgt.

7. Verfahren nach einem der Ansprüche 1, 5 oder 6, wobei der Schritt (14) des Versiegelns und Vakuumierens des Verbindungsstegs (29) in einem Vakuumzustand durchgeführt wird.

8. Verfahren nach einem der Ansprüche 1, 5 oder 6, wobei der Schritt (14) des Versiegelns der Oberflächenregion des Verbindungsstegs (29) und des Vakuumierens des Verbindungsstegs (28) in einem Nicht-Vakuumzustand durchgeführt wird.

9. Verfahren nach einem der Ansprüche 1 oder 5 bis 8, wobei das Versiegeln der Oberflächenregion (28) des Verbindungsstegs (29) eine kontinuierliche, vom Kopfende bis zum hinteren Ende, zusammenfügende Verbindungslinie (30) ausbildet.

10. Verfahren nach Anspruch 1 oder 5 bis 9, wobei ein Ausgasungsrohr (33) angewendet wird, um mit dem Verbindungssteg (29) durch die Öffnung in Fluidkommunikation zu stehen, um den Verbindungssteg (29) zu vakuumieren.

11. Verfahren nach einem der Ansprüche 1 oder 5 bis 10, ferner umfassend ein Bearbeiten (16) der Oberflächenregion (28) nach dem Schritt (15) des Behandelns des Reparaturmaterials und des metallischen Gegenstands mittels des heißisostatischen Pressens.

## Revendications

1. Procédé de réparation d'un article métallique, comprenant :
la fourniture (11) d'un article métallique (100) présentant un défaut d'écartement (101) ;
le retrait (12) de matériau d'une zone formée avec le défaut d'écartement (101) à partir de l'article métallique (100) pour former un écartement (20) ;
la disposition (13) d'un matériau de réparation dans l'écartement (20) formé ;
le scellement (14) et la mise sous vide d'une plage de liaison (29) définie entre l'article métallique (100) et le matériau de réparation ; et
le traitement (15) du matériau de réparation et de l'article métallique (100) à l'aide d'un pressage isostatique à chaud pour réaliser la réparation, dans lequel le scellement de la plage de liaison (29) est réalisé en scellant la surface (28) de la plage de liaison (29),
**caractérisé en ce que** la surface (28) de la plage de liaison (29), et le matériau de scellement forment une ligne de liaison discontinue (31) et définissent une ouverture (32) sur la surface (28) ;
dans lequel le scellement de la surface (28) de la plage de liaison (29) est réalisé à l'aide d'un procédé de dépôt de poudre par micro-étincelles.

2. Procédé selon la revendication 1, dans lequel l'article métallique (100) comprend une pièce de moteur à turbine à gaz.

3. Procédé selon la revendication 1 ou 2, dans lequel l'écartement (20) formé a un volume supérieur à un volume du défaut d'écartement (101).

4. Procédé selon l'une quelconque des revendications 1 à 3, dans lequel le matériau de réparation est sous la forme d'une partie métallique distincte (24) ou d'une poudre métallique.

5. Procédé selon la revendication 1, dans lequel une épaisseur du matériau scellé sur la surface (28) est dans une plage d'environ 0,01 mm à environ 1,0 mm.

6. Procédé selon la revendication 1 ou 5, dans lequel l'épaisseur du matériau scellé sur la surface (28) est d'environ 0,5 mm.

7. Procédé selon l'une quelconque des revendications 1, 5 ou 6, dans lequel l'étape (14) de scellement et de mise sous vide de la plage de liaison (29) est effectuée dans un état de vide.

8. Procédé selon l'une quelconque des revendications 1, 5 ou 6, dans lequel l'étape (14) de scellement de la surface de la plage de liaison (29) et de mise sous vide de la plage de liaison (28) est réalisée dans un état de non-vide.

9. Procédé selon l'une quelconque des revendications 1 ou 5 à 8, dans lequel le scellement de la surface (28) de la plage de liaison (29) forme une ligne de liaison tête-queue continue (30).

10. Procédé selon les revendications 1 ou 5 à 9, dans lequel un tube de dégazage (33) est employé pour être en communication fluidique avec la plage de liaison (29) à travers l'ouverture pour mettre sous vide la plage de liaison (29).

11. Procédé selon l'une quelconque des revendications 1 ou 5 à 10, comprenant en outre l'usinage (16) de la surface (28) après l'étape (15) de traitement du matériau de réparation et de l'article métallique par le pressage isostatique à chaud.
